# EUROPÄISCHE PATENTSCHRIFT

(11) **EP 0 756 986 B1**
(45) Veröffentlichungstag und Bekanntmachung des Hinweises auf die Patenterteilung: **11.08.1999**
(21) Anmeldenummer: 96110262.1
(22) Anmeldetag: 26.06.1996
(51) Int. Cl.: B62D 33/067

(54) **Kippbares Fahrerhaus eines Lastkraftwagen mit einer hydraulischen Kippvorrichtung**
Tiltable truck drivers' cab comprising a hydraulic pivoting mechanism
Cabine basculant de camion avec mécanisme de pivotement hydraulique

(30) Priorität: 01.08.1995 AT 130895
(43) Veröffentlichungstag der Anmeldung: 05.02.1997
(73) Patentinhaber: STEYR NUTZFAHRZEUGE AG, A-4400 Steyr (AT)
(72) Erfinder: Steyrl, Hans, 4400 Steyr (AT)

(56) Entgegenhaltungen:
- DE-B- 1 275 884
- FR-A- 379 501
- FR-A- 1 439 918

## Beschreibung

Die Erfindung betrifft ein kippbares Fahrerhaus eines Lastkraftwagen, mit einer hydraulischen Kippvorrichtung und weiteren Merkmalen, wie im Oberbegriff des Anspruches 1 angegeben.

Die hydraulischen Kippvorrichtungen bekannter Lastkraftwagen weisen eine Hydraulikpumpe auf, die zum Kippen des Fahrerhauses durch Auf- und Abbewegen einer vorher einsteckbaren Betätigungsstange aktivierbar ist. Je nach Auslegung der Hydraulikpumpe ist für das Aufkippen des Fahrerhauses eine bestimmte Anzahl von Pumpenhüben notwendig. Je größer und schwerer das Fahrerhaus, desto mehr Pumpenhübe sind erforderlich. Dieses Betätigen der Hydraulikpumpe erfordert mithin vom Fahrer für eine gewisse Zeit einen gewissen körperlichen Einsatz.

Diesem Problem wurde bereits mit einer aus der DE-AS 12 75 884 bekannten Lösung, von der die Erfindung ausgeht, versucht abzuhelfen. Dabei ist der Kippvorrichtung eine Energiespeichevorrichtung zugeordnet, die beim Rückkippen des Fahrerhauses aus gekippter Position in Normallage die freiwerdende Energie aufnimmt, speichert und beim nächsten Fahrerhaus-Kippvorgang - diesen kraftmäßig unterstützend und die hydraulische Pumpenarbeit reduzierend - wieder abgibt. Ein Nachteil dieser bekannten Lösung besteht in ihrer sehr ungünstigen Anordnung am Fahrzeug und vergleichsweise viel Platz beanspruchenden Konstruktion.

Es ist daher Aufgabe der Erfindung, für die der Kippvorrichtung zugeordnete Energiespeichervorrichtung eine einfachere und platzsparendere Lösung anzugeben.

Diese Aufgabe ist bei einem kippbaren Fahrerhaus der gattungsgemäßen Art erfindungsgemäß durch die im Kennzeichen des Anspruches 1 angegebene Ausgestaltung der Energiespeichervorrichtung gelöst.

Vorteilhafte Ausgestaltungen und Weiterbildungen dieser Lösung sind in den Unteransprüchen angegeben.

Der erfindungsgemäßen Lösung liegt dabei die Erkenntnis zugrunde, daß bei einem Rückkippen eines gekippten Fahrerhauses in dessen Normalstellung nach Überschreiten von dessen Totpunktlage Energie auftritt, die bislang nicht in dem Maße wie mit der erfindungsgemäßen Lösung ausgenutzt wurde. Die erfindungsgemäße Energiespeichervorrichtung schöpft diese bislang ungenutzte Energie soweit wie möglich ab, indem sie diese aufnimmt und speichert. Beim nächsten Auf-Kippvorgang steht dann diese gespeicherte Energie abrufbar bereit, wird dann wieder abgegeben und unterstützt dabei anfangs des Kippvorganges die Kippung des Fahrerhauses. Letzteres bedeutet eine erhebliche Reduzierung der vom Fahrer aufzubringenden Kraft zur Betätigung der Hydraulikpumpe und auch eine Reduzierung der Anzahl der Pumpenhübe für ein vollständiges Kippen des Fahrerhauses zum Beispiel auf die Hälfte der bisher notwendigen Anzahl. Dies zudem mit einer vergleichsweise einfachen, leicht herzustellenden, einwandfrei funktionierenden und sehr platzsparenden Energiespeichereinrichtung in Form eines Federkraftspeichers mit koaxialer Anordnung desselben zum Kippzylinder. In vorteilhafter Weise läßt sich aufgrund des Vorsehens des erfindungsgemäßen Energiespeichers auch der Durchmesser des Kippzylinders verkleinern.

Eine Ausführungsform des erfindungsgemäßen Energiespeichers ist in der Zeichnung dargestellt und nachfolgend anhand derselben noch näher erläutert. In der Zeichnung zeigen:
- Fig. 1: eine Ausführungsform eines erfindungsgemäßen Federkraftspeichers als Energiespeichervorrichtung und dabei eine das Energiespeicherorgan bildende Schraubenfeder in der linken Hälfte in verriegelter Speicherposition und in der rechten Hälfte in entriegelter Position vor Entspannung,
- Fig. 2a: schematisch ein Fahrerhaus eines Lastkraftwagen in ungekippter Normallage mit eingebautem Energiespeicher gemäß Fig. 1,
- Fig. 2b: das Fahrerhaus gemäß Fig. 2a in teilgekippter Lage, solange die Energieabgabe der Energiespeichervorrichtung beim Kippen wirksam ist, und
- Fig. 2c: das Fahrerhaus gemäß Fig. 2a in vollständig gekipptem Zustand.

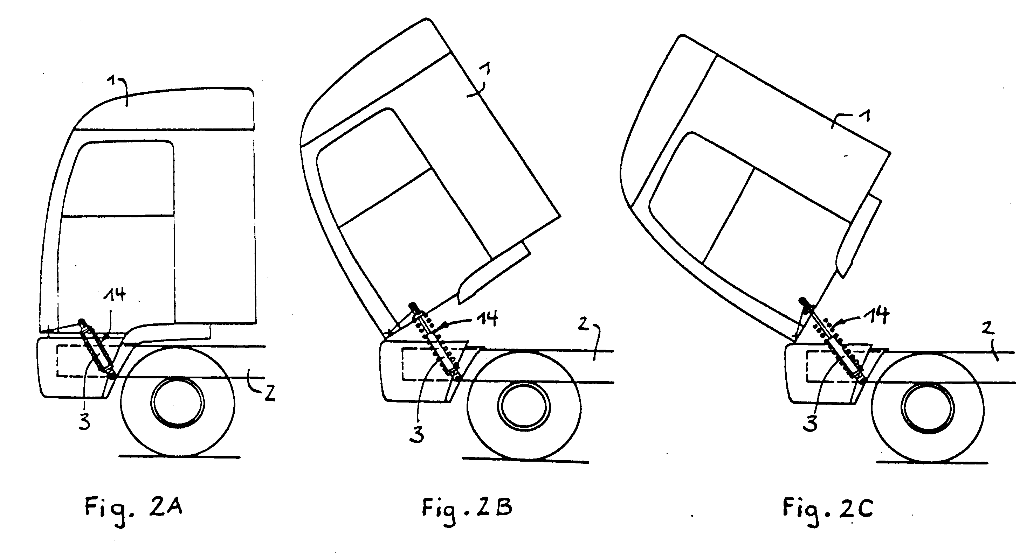

In den Figuren 2a bis 2c sind als Teile eines Lastkraftwagen dessen kippbares Fahrerhaus mit 1 und dessen Fahrgestell mit 2 bezeichnet. Zum Kippen des Fahrerhauses 1 ist eine hydraulische Kippvorrichtung vorgesehen, die aus einem insgesamt mit 3 bezeichneten Kippzylinder und einer Pumpe besteht, die nach Einstecken eines Hebels vom Fahrer von Hand in an sich bekannter Weise betätigbar ist. Der Kippzylinder 3 ist einenendes am Fahrgestell 2 und andernendes am Fahrerhaus 1, dort im Bereich von dessen Boden angelenkt. Im einzelnen besteht der Kippzylinder 3 aus einem Zylinder 4 mit darin wirkendem Kolben 5, der an einer aus dem Zylinder 4 herausgeführten Kolbenstange 6 angeschlossen ist. Zwecks Anlenkung am Fahrgestell 2 weist der Zylinder 4 untenendig ein Lagerauge 7 auf, über das und eine nicht dargestellte Achse der Kippzylinder 3 untenendig an einem fahrgestellfesten, nicht dargestellten Lagerelement schwenkbar angelenkt ist. Die obenendige Anlenkung des Kippzylinders 3 am Boden des Fahrerhauses 1 erfolgt über ein Lagerauge 8 am oberen Ende der Kolbenstange 6 mit Langloch 9, durch das ein fahrerhausfester Lagerbolzen hindurchgeführt ist. Die Länge des Langloches 9 ist so bemessen, daß die Einfederbewegungen des Fahrerhauses 1 gegenüber dem Fahrgestell während des Fahrbetriebes nicht behindert werden.

Das Lagerauge 7 ist unten an einer den Zylinder 4 unten abschließenden Bodenplatte 10 gegeben. Andernendes ist der Zylinder 4 durch eine Stirnplatte 11 verschlossen, durch deren zentrale Durchgangsbohrung 12 mit in einer Nut eingelegtem Dichtungsring 13 die Kolbenstange 6 abgedichtet aus dem Inneren des Zylinders 4 herausgeführt ist.

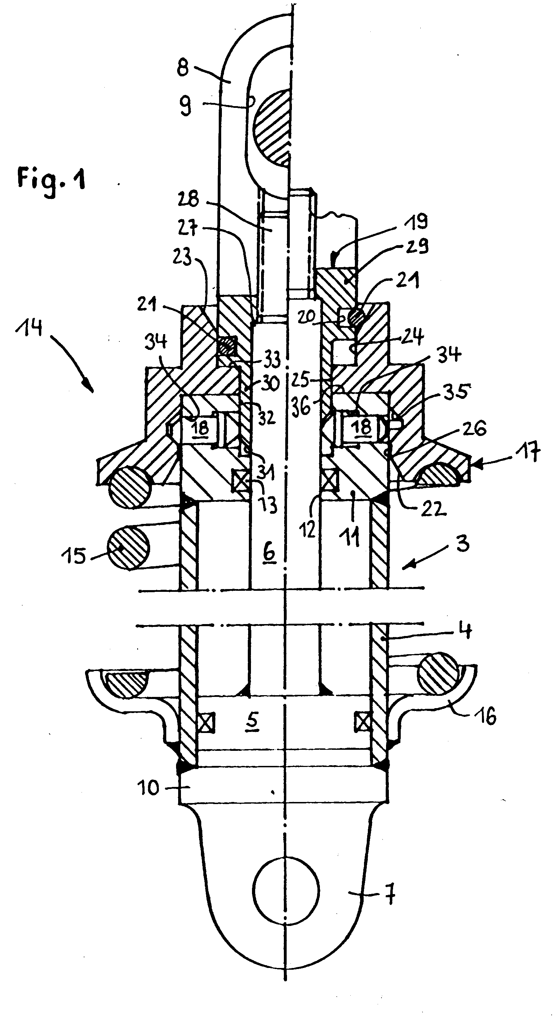

Die in Fig. 1 dargestellte Ausführungsvariante der erfindungsgemäßen Energiespeichervorrichtung 14 weist als Speicherorgan eine den Kippzylinder 3 koaxial außen umgebende Schraubenfeder 15 auf. Diese ist untenendig an einem fest mit dem Zylinder 4 verbundenen Federteller 16 und andernendes an einer Verriegelungsmuffe 17 abgestützt, die am Kippzylinder 3 axial beweglich und bei in Normallage befindlichem Fahrerhaus 1 mit dem Zylinder 4 verriegelt ist. Hierzu ist die Verriegelungsmuffe 17 selbst in spezieller, nachfolgend beschriebener Weise ausgebildet, außerdem ist hier eine spezielle Verriegelungsvorrichtung, bestehend aus mehreren in einer Querebene angeordneten Verriegelungsbolzen 18 und einer Steuerhülse 19 mit in einer außen umlaufenden Ringnut 20 eingelegtem Federring 21. Die Verriegelungsmuffe 17 ist durch ein ringförmiges Drehteil gebildet, das eine mehrfach abgestufte, oben und unten mit kegligen Ansenkungen 22, 23 versehene zentrale Durchgangsbohrung mit zylindrischen Bohrungsabschnitten 24, 25 und 26 aufweist. Der untere durchmessergrößte zylindrische Bohrungsabschnitt 26 ist an den Außendurchmesser der Stirnplatte 11 am Zylinder 4 für leichtgängiges Übergreifen angepaßt. Die untenendige keglige Ansenkung 22 an der Verriegelungsmuffe 17 dient dazu, letztere beim Zubewegen auf die Stirnplatte 11 in Bezug auf diese zu zentrieren. Die Steuerhülse 19 ist fest am oberen freien Ende der Kolbenstange 6 befestigt, im dargestellten Beispiel dabei an einer Schulter 27 abgestützt und durch das auf einen endseitigen Gewindezapfen 28 aufgeschraubte Lagerauge 8 gekontert in Anbaulage gehalten. Die Steuerhülse 19 selbst besteht aus einem oberen Kopf 29, in dem die Ringnut 20 mit Federring 21 gegeben sind, und einem unten daran anschließenden ringzylindrischen Steuerhals 30, der untenendig eine keglige Anfasung 31 aufweist. Der Außendurchmesser des Steuerhülsen-Kopfes 29 ist dabei für leichtgängiges Eintauchen in dem Bohrungsabschnitt 24 der Verriegelungsmuffe 17 und der Außendurchmesser des Steuerhalses 30 für leichtgängiges Durchführen durch den Bohrungsabschnitt 25 der Verriegelungsmuffe 17 und leichtgängiges Eintauchen in einen erweiterten Bohrungsabschnitt 32 in der Stirnplatte 11 ausgebildet. Die obenendige keglige Anfasung 23 an der Verriegelungsmuffe 17 dient dazu, beim Eintreten der Steuerhülse 19 in die Verriegelungsmuffe 17 den Federring 21 radial einwärts in die Nut 21 hineinzupressen. Im vollständig eingefahrenen Zustand, in dem die Steuerhülse 19 mit ihrem Kopf 29 an einer Schulter 33 der Verriegelungsmuffe 17 abgestützt ist - siehe Fig. 1 linke Hälfte -, ist der Verbund zwischen Verriegelungsmuffe 17 und Steuerhülse 19 durch die radial nach außen wirkende Kraft des Federringes 21 sichergestellt. Die untenendig der Steuerhülse 19 gegebene keglige Anfasung 31 dient dazu, beim Eintauchen der Steuerhülse 19 in die Verriegelungsmuffe 17 die in durchmessermäßig abgesetzten Querbohrungen 34 aufgenommenen Verriegelungsbolzen 18 über deren keglige Steuerköpfe quer nach außen in eine den Bohrungsabschnitt 26 der Verriegelungsmuffe 17 hinterschneidende Verriegelungsnut 35 zu verschieben. Im Verriegelungszustand - siehe Fig. 1 linke Hälfte - sind die Verriegelungsbolzen 18 durch die Außenseite des Steuerhalses 30 der Steuerhülse 17 abgestützt und halten mit ihren äußeren kegligen Enden die Verriegelungsmuffe 17 in Verriegelungsposition an der Stirnplatte 11 des Zylinders 4, in welchem Verriegelungszustand die Verriegelungsmuffe 17 an der Stirnplatte 11, dort an deren Stirnseite 36 abgestützt ist. Die untere Flanke der Verriegelungsnut 35 ist in Verbindung mit der Kegligkeit der äußeren Enden der Verriegelungsbolzen 18 so ausgebildet, daß bei Auflösung der Verriegelung durch die Steuerhülse 19 die Verriegelungsbolzen 18 durch eine Relativbewegung der Verriegelungsmuffe 17 gegenüber der Stirnplatte 11 radial einwärts in ihre entriegelte Position verschiebbar sind.

Nachstehend ist auf die Funktion der erfindungsgemäßen Energiespeichereinrichtung unter Zuhilfenahme der Zeichnung näher eingegangen. Fig. 1 linke Hälfte zeigt die Schraubenfeder 15 im vorgespannten und verriegelten Zustand, in welchem die beim Rückschwenken eines Fahrerhauses aus gekippter Position auftretende Energie eingespeichert ist. Diese Energie ist beim nächsten Kippvorgang in folgender Weise freisetzbar. Durch Betätigung der Pumpe der hydraulischen Kippvorrichtung wird zu Beginn eines Fahrerhaus-Kippvorganges, mit dem dieses aus Normalstellung in gekippte Position überführbar ist, zunächst der Kolben 5 im Zylinder 4, damit auch die Kolbenstange 6 und mit dieser die Steuerhülse 19 aus ihrer in Fig. 1 linke Hälfte gezeigten Sperrlage verschoben. Nach relativ kurzem Axialhubweg kommt der Federring 21 in den Bereich der kegligen Ansenkung 23 der Verriegelungsmuffe 17 und entspannt sich. In dieser Stellung der Steuerhülse 19 sind die Verriegelungsbolzen 18 nicht mehr blockiert und werden über die Kraft der sich nun entspannenden Schraubenfeder 15 durch die untere schräge Flanke der Verriegelungsnut 35 radial einwärts gedrückt. Anschließend gibt die Schraubenfeder 15 durch entsprechende Entspannung die von ihr vorher gespeicherte Energie ab, wobei die hydraulische Betätigung unterstützt wird, und zwar so lange bzw. bis zu einem solchen Kippwinkel des Fahrerhauses 1 - siehe Fig. 2b -, bis die Schraubendruckfeder 15 vollständig entspannt ist. Anschließend erfolgt das Weiterkippen des Fahrerhauses rein durch die hydraulische Kippvorrichtung.

Beim Zurückkippen des Fahrerhauses aus vollständig gekippter Position - siehe Fig. 2c - in dessen Normalposition - siehe Fig. 2a - wird das Fahrerhaus 1 zunächst durch Betätigung der Pumpe der hydraulischen Kippvorrichtung wieder in Richtung Normalstellung verschwenkt. Ab dem aus Fig. 2b ersichtlichen Kippwinkel (= Totpunktlage) beginnt die Energieeinspeicherung in die Schraubendruckfeder 15, wobei diese Energie letztendlich aus der hebelarmmäßig wirksamen Fahrerhaus-Gewichtskraft resultiert. Das Fahrerhaus läßt sich dabei aufgrund der Schwerkraft leichtgängig absenken und komprimiert die Schraubendruckfeder in zunehmendem Maß. In der Endphase dieses Zusammenpreßvorganges der Schraubendruckfeder gleitet die Verriegelungsmuffe über die Stirnplatte 11 und kommt dann an deren Stirnseite 36 zur Anlage. Dieser Zustand ist in Fig. 1 rechte Hälfte dargestellt. Ab diesem Punkt setzt die Unterstützung der hydraulischen Pumpe wieder ein, wobei durch deren Betätigung die Kolbenstange 6 und damit die mit dieser verbundene Steuerhülse 19 weiter nach unten bewegt wird, wobei der Federring 21 über die keglige Ansenkung 23 der Verriegelungsmuffe 17 in die Ringnut 20 der Steuerhülse 19 eingedrückt wird. Ersichtlicherweise ist der Federring 21 hinsichtlich seiner-Kraftentfaltung so dimensioniert, daß die in Verbindung mit der kegligen Ansenkung 23 erforderliche Kraft zu seinem Zusammendrücken größer ist als die in Axialrichtung wirkende Kraft der Schraubenfeder 15. Gleichzeitig mit dem Eindrücken des Federringes 21 in die Ringnut 20 erfolgt durch die Axialverschiebung der Steuerhülse 19 über deren keglige Unterkante 31 ein Radial-nach-Außen-Verschieben der Verriegelungsbolzen 18 in ihre Verriegelungsposition in die Verriegelungsnut 35 der Verriegelungsmuffe 17 hinein. Sobald die Verriegelungsbolzen 18 außenseitig am Steuerhals 30 der Steuerhülse 19 abgestützt sind - siehe Fig. 1 linke Hälfte - ist der Verriegelungsvorgang, damit auch der Energiespeichervorgang und die Rückschwenkung des Fahrerhauses in seine Normallage beendet. Die radial nach außen gerichtete und am zylindrischen Bohrungsabschnitt 24 der Verriegelungsmuffe 17 wirksame Kraft des Federringes 21 verhindert eine ungewollte Entriegelung.

## Patentansprüche

1. Kippbares Fahrerhaus eines Lastkraftwagens, mit einer hydraulischen Kippvorrichtung, umfassend einen aus Zylinder (4), Kolben (5) und Kolbenstange (6) bestehenden, einenendes am Fahrgestell (2), andernendes am Fahrerhaus (1) angelenkten Kippzylinder (3) und eine über eine Betätigungseinrichtung aktivierbare Pumpe, mit der der Kippzylinder mit Drucköl versorgbar ist, und mit einer der Kippvorrichtung zugeordneten Energiespeichervorrichtung (14), die beim Rückkippen des Fahrerhauses aus gekippter Position in Normallage die freiwerdende Energie aufnimmt, speichert und beim nächsten Fahrerhaus-Kippvorgang - diesen kraftmäßig unterstützend und die hydraulische Pumparbeit reduzierend - wieder abgibt, dadurch gekennzeichnet, daß die Energiespeichervorrichtung (14) durch einen Federkraftspeicher gebildet ist, der eine koaxial zum Kippzylinder (3) angeordnete, diesen außen umgebende Schraubenfeder (15) aufweist, die einenendes an einem fest mit dem Zylinder (4) verbundenen Federteller (16) und andernendes an einer Verriegelungsmuffe (17) abgestützt ist, die Bestandteil einer Verriegelungseinrichtung ist, mit der die Schraubenfeder (15) in gespanntem Zustand mit dem Zylinder (4) verriegelbar und von diesem für Kraftabgabe entriegelbar ist.

2. Kippbares Fahrerhaus nach Anspruch 1, dadurch gekennzeichnet, daß die Verriegelungseinrichtung aus der speziell ausgebildeten Verriegelungsmuffe (17), einer fest mit der Kolbenstange (6) vorzugsweise an deren freiem Endbereich verbundenen Steuerhülse (19) und Verriegelungsbolzen (18) besteht, welch letztere in einer den oberen Abschluß des Zylinders (4) bildenden Stirnplatte (11), dort in einer Querebene gegebenen Aufnahmebohrungen (34) querverschiebbar sind, und zwar aus einer nichtsperrenden Lage, in der sie außen an der Kolbenstange (6) anliegen, in eine Sperrposition, in der sie in eine in der Verriegelungsmuffe (17) ausgebildete Verriegelungsnut (35) hineintauchen, und aus dieser Sperrposition wieder zurück in nichtsperrende Position.

3. Kippbares Fahrerhaus nach den vorhergehenden Ansprüchen, dadurch gekennzeichnet, daß die der Ver- und Entriegelung dienende Steuerhülse (19) einen Kopf (29) mit einer außen umlaufenden Nut (20) und darin gegebenen, in ungespannten Zustand partiell aus der Nut herausragenden Federring (21), der bei Eintauchen des Kopfes (29) in einen Abschnitt (24) der zentralen Durchgangsbohrung der Verriegelungsmuffe (17) durch eine keglige Ansenkung (23) eingangs derselben in die Nut (20) eindrückbar ist und anschließend durch entsprechenden Kraftschluß mit dem Bohrungs-Abschnitt (24) den Verriegelungszustand sichert.

4. Kippbares Fahrerhaus nach den vorhergehenden Ansprüchen, dadurch gekennzeichnet, daß die der Ver- und Entriegelung dienende Steuerhülse (19) im Anschluß an den Kopf (29) unterhalb desselben einen ringzylindrischen Steuerhals (30) mit gegenüber dem Kopf (29) kleineren Außendurchmesser aufweist, der untenendig eine keglige Anfasung (31) aufweist, die an die kegligen Steuerköpfe der Verriegelungsbolzen (18) angepaßt und so geneigt ist, daß die Verriegelungsbolzen (18) bei Eintauchen des Steuerhalses (30) in einen erweiterten Abschnitt (32) der Durchgangsbohrung der Stirnplatte (11) durch die Anfasung (31) senkrecht zur Bewegungsrichtung der Steuerhülse (19) in die Verriegelungsnut (35) der Verriegelungsmuffe (17) hinein verschoben werden.

5. Kippbares Fahrerhaus nach den vorhergehenden Ansprüchen, dadurch gekennzeichnet, daß die in die Verriegelungsnut (35) der Verriegelungsmuffe (17) eintauchenden äußeren Enden der Verriegelungsbolzen kegelig ausgebildet bzw. angefast sind und die Verriegelungsflanke der Verriegelungsnut (35) so schräg gestellt ist, daß die Verriegelungsbolzen (18) nach Freigabe durch die Steuerhülse (19) mittels Axialverschiebung der Verriegelungsmuffe (17) unter Einwirkung der sich dann entspannenden Schraubenfeder (15) wieder in ihre nichtsperrende Lage zurückverschiebbar sind.

6. Kippbares Fahrerhaus nach einem der vorhergehenden Ansprüche, dadurch gekennzeichnet, daß die Verriegelungsmuffe (17) unten eingangs ihres Durchgangsbohrungs-Abschnittes (26), in dem auch die Verriegelungsnut (35) ausgebildet ist, eine keglig sich erweiternde Ansenkung (22) aufweist, die bei Zubewegung der Verriegelungsmuffe (17) auf die Stirnplatte (11) in Bezug auf diese eine Zentrierung herbeiführt.

## Claims

1. Tilting cab of a truck with a hydraulic tilt mechanism comprising a tilting cylinder (3) consisting of a cylinder (4), a piston (5) and a piston rod (6) and located, at one end, at the chassis (2) and, at the other end, at the cab (1) and a pump which can be activated via an actuating device and supplies the tilting cylinder with pressure oil and an energy storage device (14) allocated to the tilting device and absorbing and storing the energy released when the cab is being tilted back from the tilted to normal position and again releasing the stored energy during the next cab tilting action - supporting this action by supplying force and thus reducing the hydraulic pumping work - characterised in that the energy storage device (14) is designed as a spring force storage mechanism provided with a coil spring (15) arranged coaxially in relation to the tilting cylinder (3) and embracing said tilting cylinder (3) on the outside and supported, at one end, on a spring plate (16) firmly connected with the cylinder (4) and, at the other end, on a locking collar (17) which is part of a locking mechanism with which the coil spring (15) in the tensioned condition can be interlocked with the cylinder (4) and unlocked by said cylinder (4) for the release of force.

2. Tilting cab according to Claim 1, characterised in that the locking mechanism consists of the specially designed locking collar (17), of a control sleeve (19) firmly connected with the piston rod (6) preferably in its free end area and of locking pins (18) which can, in an end plate (11) forming the upper end of the cylinder (4), be moved in transverse direction in location bores provided in a transverse plane, ie from a non-locking position in which they are in contact with the outside of the piston rod (6) to a locking position in which they move into a locking groove (35) located in the locking collar (17) and from this locking position back into the non-locking position.

3. Tilting cab according to one of the foregoing Claims, characterised in that the control sleeve (19) for the locking and unlocking actions is provided with a head (29) with a continuous groove (20) on the outside and a spring ring (21) provided in and, in the unloaded condition, partially projecting from said groove (20), which spring ring (21) can, upon the penetration of the head (29) into a section (24) of the central passage bore of the locking collar (17) and by way of the tapered countersinking (23) located at the entry to said locking collar (17), be pressed into the groove (20) and subsequently secures the locking condition by mating with bore section (24).

4. Tilting cab according to one of the foregoing claims, characterised in that the control sleeve (19) for the locking and unlocking actions is provided with a cylindrical control collar (30) connected to and located below the head (29) and having an outer diameter which is smaller than that of said head (29), which control collar (30) features at its lower end a conically chamfered portion (31) adapted to the conic control heads of the locking pins (18) and inclined so that the locking pins (18), upon the penetration of the control collar (30) into an enlarged section (32) of the passage bore of the front plate (11), are, owing to the chamfered portion (31), pushed into the locking groove (35) of the locking collar (17) perpendicularly in relation to the direction of motion of the control sleeve (19).

5. Tilting cab according to one of the foregoing claims, characterised in that the outer ends of the locking bolts penetrating into the locking groove (35) of the locking collar (17) are conically shaped/chamfered and the locking flank of the locking groove (35) is positioned so obliquely that the locking pins (18), upon their being released by the control sleeve (19), can by means of the axial motion of the locking collar (17) and by the action of the then relaxing coil spring (15) be pushed back into their non-locking position.

6. Tilting cab according to one of the foregoing claims, characterised in that the locking collar (17) features at its lower end a conically expanding countersinking (22) at the entry to its passage-bore section (26) also incorporating the locking groove (35), which conically expanding countersinking (22) effects a centring action in respect of said end plate (11) when the locking collar (17) is moving towards the end plate (11).

## Revendications

1. Cabine basculante de conducteur d'un camion, avec un dispositif hydraulique de basculement, comprenant un vérin de basculement (3) se composant d'un cylindre (4), d'un piston (5) et d'une tige de piston(6), articulé à une extrémité sur le châssis (2) du véhicule, et à l'autre extrémité sur la cabine de conducteur (1), et une pompe qui peut être activée au moyen d'un dispositif d'actionnement, avec laquelle on peut alimenter le vérin de basculement en huile sous pression, et avec un dispositif accumulateur d'énergie (14),qui est associé au dispositif de basculement, et qui recueille et emmagasine l'énergie qui vient à être libérée lors du basculement en retour de la cabine du conducteur de sa position basculée à sa position normale, et lors du processus suivant de basculement de la cabine de conducteur délivre à nouveau cette énergie - en accompagnant de sa force le travail hydraulique de la pompe et en réduisant celui-ci,
caractérisée en ce que
le dispositif d'accumulation d'énergie (14) est constitué par un accumulateur de force élastique, qui présente un ressort à boudin (15), disposé de façon coaxiale par rapport au vérin de basculement (3) et entourant celui-ci à l'extérieur, accumulateur de force élastique (15) prend appui à une extrémité sur une cuvette de ressort (16)qui est reliée de façon solidaire au cylindre (4) et à l'autre extrémité sur un manchon de verrouillage (17), qui est une pièce constitutive d'un dispositif de verrouillage, avec lequel on peut verrouiller le ressort à boudin (15) avec le cylindre (4) en position tendue et le déverrouiller d'avec celui-ci pour libérer son énergie.

2. Cabine basculante de conducteur selon la revendication 1,
caractérisée en ce que
le dispositif de déverrouillage se compose du manchon de verrouillage (17) spécialement constitué, d'un manchon de commande (19) relié de préférence de façon solidaire à la tige (6) du piston par sa zone terminale libre, et d'axes de verrouillage (18), ces derniers se trouvant dans une plaque frontale (11), qui forme la terminaison supérieure du cylindre (4), et pouvant coulisser à cet endroit dans des alésages de réception (34) qui sont dans un plan transversal, et en fait coulissent à partir d'une position de non blocage, dans laquelle ils reposent à l'extérieur sur la tige du piston (6), dans une position de blocage, dans laquelle ils s'enfoncent dans une rainure de verrouillage (35) constituée dans le manchon de verrouillage (17), et coulissent à partir de cette position de blocage à nouveau en arrière dans la position de non blocage.

3. Cabine basculante de conducteur selon l'une des revendications précédentes,
caractérisée en ce que
le manchon de commande (19) qui sert à verrouiller et à déverrouiller, présente une tête (29) avec une rainure extérieure (20), qui fait tout le tour, et dedans une bague élastique (21)qui quand elle n'est pas tendue, fait en partie saillie hors de la rainure, et qui peut être pressée, dans la rainure (20) lors de l'enfoncement de la tête (29) dans une section (24) de l'alésage central de passage du manchon de verrouillage (17) par un chanfrein conique (23) situé à l'entrée de celui-ci et ensuite assure le verrouillage par un engagement par la force correspondant avec la section (24) d'alésage.

4. Cabine basculante de conducteur selon l'une des revendications précédentes,
caractérisée en ce que
le manchon de commande (19) qui sert à verrouiller et à déverrouiller présente à la suite de la tête (29), en dessous de celle-ci, un col de commande (30) cylindrique annulaire, avec un diamètre extérieur plus petit par rapport à celui de la têt (29), col de commande (30) qui présente à son extrémité inférieur un chanfreinage conique (31), qui est adapté aux têtes de commande coniques des axes de verrouillage (18) et a une inclinaison telle que l'on fait coulisser les axes de verrouillage (18) en enfonçant le col de commande (30) dans une section élargie (32) de l'alésage de passage de la plaque frontale (11) grâce au chanfreinage (31) perpendiculairement à la direction du mouvement du manchon de commande (19) dans la rainure de verrouillage (35) du manchon de verrouillage (17).

5. Cabine basculante de conducteur selon l'une des revendications précédentes,
caractérisée en ce que
les extrémités extérieures des axes de verrouillage, qui s'enfoncent dans la rainure de verrouillage (35) du manchon de verrouillage (17) sont constituées ou chanfreinées de façon conique et les flancs de verrouillage de la rainure de verrouillage (35), sont placés obliquement de telle façon que les axes de verrouillage (18) après avoir été libérés par le manchon de commande (19) peuvent coulisser en arrière dans leur position de non blocage au moyen d'un coulissement axial du manchon de verrouillage (17) sous l'action du ressort à boudin (15), qui se détend alors.

6. Cabine basculante de conducteur selon l'une des revendications précédentes,
caractérisée en ce que
le manchon de verrouillage (17)présente en bas à l'entrée de sa section (23) d'alésage de passage, dans laquelle est constituée aussi la rainure de verrouillage (35), un chanfreinage (22) qui va en s'élargissant de façon conique, assurant lors du mouvement d'arrivée du manchon de verrouillage (17) sur la plaque frontale (11), un centrage par rapport à celle-ci.
